# EUROPÄISCHE PATENTSCHRIFT

(11) **EP 0 386 481 B1**
(45) Veröffentlichungstag und Bekanntmachung des Hinweises auf die Patenterteilung: **04.08.1993**
(21) Anmeldenummer: 90102384.6
(22) Anmeldetag: 07.02.1990
(51) Int. Cl.: G01F 1/704, G01F 1/708, G01P 5/08

(54) **Verfahren zur Strömungsmessung und Vorrichtung hierzu**
Method and device for flow measurement
Méthode et dispositif pour la mesure d'écoulement

(30) Priorität: 04.03.1989 DE 3906998
(43) Veröffentlichungstag der Anmeldung: 12.09.1990
(73) Patentinhaber: Frankenberger, Horst, Prof.Dr., D-23611 Bad Schwartau (DE)
(72) Erfinder: Frankenberger, Horst, Prof. Dr., D-2407 Bad Schwartau (DE); Salamon, Manfred, Dipl.-Ing., D-2400 Lübeck 1 (DE)
(74) Vertreter: Moser, Herbert, Dr.-Ing. Patentanwalt

(56) Entgegenhaltungen:
- DD-A- 229 504
- FR-A- 2 510 614
- US-A- 4 570 492

## Beschreibung

Die Erfindung betrifft ein Verfahren zur Strömungsmessung, bei dem durch Anlegen elektrischer Spannung ein Markierungsvolumen erzeugt wird, welches in Strömungsrichtung eine Meßstrecke durchläuft, wobei aus der Laufzeit des Markierungsvolumens die Strömungsgeschwindigkeit oder eine mit der Strömungsgeschwindigkeit verknüpfte Meßgröße ermittelt wird.

Zur Durchflußmessung von strömenden Medien ist eine Mehrzahl von technischen Meßverfahren bekannt. In der DE-A 29 44 979 wird ein Verfahren zur Durchflußmessung von nichtleitenden Medien beschrieben, bei dem das strömende Medium durch Ionisierung impulsweise markiert wird, und aus der Zeitdauer, in welcher die Markierung eine Meßstrecke durchläuft, läßt sich der Durchfluß ermitteln.

In der gleichen veröffentlichten Patentanmeldung wird alternativ vorgeschlagen, das strömende Medium impulsweise mit einem entsprechend beaufschlagten Heizdraht zu erwärmen und die Wanderung des Markierungsvolumens von erhöhter Temperatur durch temperaturabhängige Widerstände oder Thermoelemente zu bestimmen.

Aus der US-A 4 570 492 ist ein Meßverfahren zur Bestimmung der Strömungsgeschwindigkeit eines fließenden Mediums bekannt. Dabei wird in dem Medium durch Anlegen eines Stromimpulses an eine Elektrode auf elektrochemischem Weg ein Markierungsvolumen erzeugt. Die Strömungsgeschwindigkeit wird durch die Messung der Zeit bestimmt, die das Markierungsvolumen für das Zurücklegen einer durch zwei Elektroden gebildeten Referenzstrecke benötigt. Die periodische Erzeugung von Markierungsvolumina findet dabei mehrmals in einer Sekunde statt. Dieses Meßverfahren ist vor allem für die Messung der Relativgeschwindigkeit zwischen Wasserfahrzeugen, insbesondere Unterseebooten, und dem sie umgebenden Wasser vorgesehen.

Zum Stande der Technik gehören ferner Ionisationsdurchflußmesser, wie sie in den US-A 4 393 719 und 4 186 601 beschrieben sind. Dabei wird durch eine Hochspannungsquelle eine impulsweise Ionisation des strömenden nichtleitenden Mediums, beispielsweise eines Luft-Brennstoffgemisches für Verbrennungskraftmaschinen,erzeugt und die Wanderung der Ionisationswolke in einer Meßstrecke bestimmt.

Aus dem Stande der Technik ist ferner das Salzlösungsverfahren nach van Allen bekannt (vgl. v. Allen, Ch.M. "The salt velocity method of water measurement" Trans-ASME Vol 45 (1923), S. 285 und Calame, H "Impfverfahren mit chemischen und radioaktiven Substanzen, thermisches und kalorisches Meßverfahren" VDI-Berichte Nr. 86 (1964) S. 59) bei dem innerhalb eines kurzen Zeitintervalls in das strömende Medium eine Salzlösung bestimmter Mindestkonzentration schußweise eingespritzt wird. Durch zwei Elektrodenpaare wird die Änderung der Leitfähigkeit des strömenden Mediums durch die eingelagerte Lösungswolke mit Hilfe einer oszillographischen Laufzeitmessung bestimmt. Die Auswertung des Laufzeitdiagramms erfolgt aus einem Integralmittelwert der Leitfähigkeitsänderung. Die Meßgenauigkeit des Verfahrens ist mit 1 % bei Meßwertmittelung relativ hoch.

Die vorbekannten Verfahren der Durchflußmessung sind jedoch nicht oder nur mit unbefriedigendem Ergebnis anwendbar, wenn eine Strömungsmessung von wäßrigen in den Körper einströmenden, im Körper fließenden, aus dem Körper austretenden oder mit Körperflüssigkeiten in Austausch tretenden Flüssigkeiten durchzuführen ist. Dabei sollen sowohl Infusionslösungen, als auch Medikamentenlösungen sowie Dialyselösungen und Körperflüssigkeiten, insbesondere die mit Dialyselösungen in Austausch tretende Blutflüssigkeit eingeschlossen werden. Zu den Flüssigkeiten gehören auch aus dem Körper abgesaugte oder ausgeschiedene Flüssigkeiten. Allgemein handelt es sich dabei um wäßrige körpereigene oder dem menschlichen Körper zur Ernährung bzw. zur Therapie zugeführte Flüssigkeiten, die mit den körpertypischen Geschwindigkeiten strömen bzw. zugeführt werden müssen.

Obwohl die Strömungsgeschwindigkeit dieser Flüssigkeiten im allgemeinen relativ gering ist und in der Größenordnung von 10⁻³ cm/sec liegt, ergeben sich wegen des weiten Variationsbereichs große Unterschiede der zu messenden Strömungsgeschwindigkeiten. So wird beispielsweise für Infusionslösungen ein Minimalwert von 0,1 ml pro Stunde gefordert, während der Maximalwert 1 l pro Stunde beträgt. Dies bedeutet einen Unterschied von vier Zehnerpotenzen.

Die Erfindung geht von der Aufgabenstellung aus, ein Verfahren zur Strömungsmessung anzugeben, mit dem in den Körper einströmende, im Körper fließende, aus dem Körper austretende oder mit Körperflüssigkeiten in Austausch tretende Flüssigkeiten in ihren charakteristischen, insbesondere relativ geringen Strömungsgeschwindigkeiten meßtechnisch genau bestimmt werden können, ohne daß dabei eine unzulässige Veränderung der Flüssigkeit, insbesondere eine unerwünschte Beimischung von Markierungsstoffen eintritt. Das Verfahren soll dabei sowohl die Messung der Strömungsgeschwindigkeit, als auch die Identifizierung bzw. Unterscheidung verschiedener nacheinander strömender Flüssigkeiten ermöglichen.

Die Lösung dieser Aufgabenstellung erfolgt erfindungsgemäß dadurch, daß das Markierungsvolumen aus elektrolytischen Infusionslösungen, Medikamentenlösungen, sowie Dialyselösungen und Körperflüssigkeiten, die in den Körper einströmen, im Körper fließen, aus dem Körper austreten oder mit Körperflüssigkeiten in Austausch treten, durch eine kurzzeitige elektrolytische Zerlegung der Flüssigkeit durch Gleichspannungsimpulse mit einer Dauer unterhalb von 50 msec. gebildet wird, und daß der Impulsabstand oberhalb von 1 sec. und die angelegte Spannung unterhalb von 24 Volt liegen. Die Impulsdauer und die Impulsfolge sind dabei so auszuwählen, daß nur minimale Stoffumsetzungen stattfinden, welche die körperbezogene Flüssigkeit nicht unzulässig verändern.

Die Wanderung des Markierungsvolumens in der Meßstrecke kann mit verschiedenen bekannten Meßverfahren vorzugsweise durch Leitfähigkeitsmessung bestimmt werden. Gegebenenfalls läßt sich die Wanderung des Markierungsvolumens in der Meßstrecke auch durch eine potentiostatische Messung mit Hilfe von Halbleiterdetektoren bestimmen. Ein zusätzlicher Vorteil läßt sich gegebenenfalls dadurch erreichen, daß in der Meßstrecke ein elektrisches Gleich- und/oder Wechselfeld angelegt wird. Dabei sind auch Ausbildungen möglich, bei denen die Meßelektrode im Gegensatz zu einer passiven Elektrode ein aktives Element darstellt, mit dem ein elektrophoretischer Effekt bewirkt werden kann. Durch diese zusätzliche Maßnahme ergibt sich gegebenenfalls eine Erhöhung der Meßempfindlichkeit.

Es kann ferner vorteilhaft sein, gegebenenfalls zusätzlich zur Strömungsgeschwindigkeit die Art der strömenden Flüssigkeit aus dem zeitlichen Verlauf der Meßgröße zu unterscheiden bzw. eine bestimmte strömende Flüssigkeit zu identifizieren. Dies besitzt Bedeutung, wenn beispielsweise bei Infusionen verschiedene Infusionslösungen nacheinander verabreicht werden sollen.

Ein zweckmäßiger Sensor zur Strömungsmessung kann bestenen aus einer ein Markierungsvolumen erzeugenden Arbeitselektrode, zwei eine Meßstrecke bildenden Meßelektroden, die in Strömungsrichtung hinter der Arbeitselektrode angeordnet sind, einem Impulsgenerator der so ausgebildet ist, Gleichspannungsimpulse an die Arbeitselektrode anzulegen, um durch kurzzeitige elektrolytische Zerlegung der Flüssigkeit ein Markierungsvolumen zu erzeugen, eine Laufzeitmeßvorrichtung, die an den Meßelektroden angeschlossen ist und die so angeordnet ist, um aus der Laufzeit des Markierungsvolumens an den Meßelektroden vorbei, die Strömungsgeschwindigkeit zu bestimmen, bei dem um die Strömungsgeschwindigkeit von elektrolytischen Infusionlösungen, Medikamentenlösungen eine Dialyselösungen und Körperflüssigkeiten, die in dem Körper einströmen, im Körper fließen, aus dem Körper austreten oder mit Körperflüssigkeiten in Austausch treten, zu messen, die Elektroden auf einem in einem einen Durchfluß bestimmenden Hohlraum angeordneten plättchenförmigen Elektrodenträger angebracht sind, und der Impulsgenerator so angeordnet ist, daß die Gleichspannungsimpulse mit einer Dauer unterhalb von 50 msec gebildet werden, und der Impulsabstand oberhalb von 1 sec und die angelegte Spannung unterhalb von 24 sec liegt.

Eine bautechnisch zweckmäßige Ausbildung kann in der Weise erreicht werden, daß der Sensor als Schlauchverbinder mit entsprechenden Anschlußteilen ausgebildet ist. Dadurch läßt sich ein solcher Sensor z.B. unmittelbar in eine zum Patienten führende Infusionsleitung zwischenschalten.

Obwohl verschiedene Ausbildungen der Meßelektroden und/ oder der Arbeitselektrode möglich sind, kann es zweckmäßig sein, die Meßelektroden und/oder die Arbeitselektrode aus je zwei auf den beiden Seiten eines dielektrischen Trägers angeordneten Belägen aufzubauen, welche jeweils eine Kondensatoranordnung bilden. Auf diese Weise wird eine Feldkonzentration im mittleren Querschnittsbereich der Strömung erzielt, welche für die Messung günstig erscheint. Da die Strömungsgeschwindigkeit bei einem rohrförmigen Hohlraum über den Querschnitt rotationssymmetrisch verteilt ist, wobei in der Mittelachse die größte Strömungsgeschwindigkeit auftritt, während unmittelbar an der Innenwandfläche ein Strömungsnullwert erreicht wird, erscheint es möglich, die Arbeits- bzw. Meßelektroden so anzuordnen, daß der wesentliche Hauptteil der Strömung im Mittelbereich erfaßt wird.

Das angegebene Verfahren zur Strömungsmessung und die beschriebene Vorrichtung eignen sich besonders zur Überwachung der Strömungsgeschwindigkeit von Infusionsflüssigkeiten, die sowohl durch eine Tropfvorrichtung als auch durch eine oder mehrere gesteuerte Infusionspumpen zugeführt werden können. Dabei ist durch die genaue Überwachung der Strömungsgeschwindigkeit und der zugeführten Menge auch eine Anwendung bei der Zuführung mehrerer durch verschiedene Infusionspumpen/Infusionsspritzenpumpen geförderter Infusionsflüssigkeiten und gegebenenfalls auch deren Unterscheidung möglich. Das Meßverfahren bietet außerdem die Möglichkeit der einfachen Flußdetektion im Sinne einer Ja/ Nein-Erkennung, so daß beispielsweise beim Auslaufen einer Infusion eine Alarmmeldung abgegeben werden kann.

Einzweckmäßiger Sensor zur Strömungsmessung gemäß des Erfindung umfaßt und eine ein Markierungsvolumen erzeugende Arbeitseleketrode, zwei eine Meßstrecke bildende Meßelektroden, die in Strömungsrichtung hinter der Arbeitselektrode angeordnet sind,
einen Impulsgenerator, der so ausgebildet ist, Gleichspannungsimpulse an die Arbeitselektrode anzulegen, um durch kurzzeitige elektrolytische Zerlegung der Flüssigkeit ein Markierungsvolumen zu erzeugen,
eine Laufzeitmeßvorrichtung, die an den Meßelektroden angeschlossen ist und die so angeordnet ist, um aus der Laufzeit des Markierungsvolumens an den Meßelektroden vorbei, die Strömungsgeschwindigkeit zu bestimmen,
**dadurch gekennzeichnet**, daß um im Körper fließenden Korperflüssigkeiten zu messen,
die Elektroden auf der Anßenseite eines Katheters angeordnet sind, und daß
der Impulsgenerator so angeordnet ist, daß die Gleichspannungsimpulse mit einer Dauer unterhalb von 50 msec gebildet werden, und der Impulsabstand oberhalb von 1 sec und die angelegte Spannung unterhalb von 24 Volt liegt.

Eine bevorzugte Anwendung des Meßverfahrens und des Sensors besteht in der Überwachung der Dialyse, und zwar sowohl hinsichtlich des strömenden Blutes, als auch in bezug auf die an der permeablen Austauschwand strömende Austauschflüssigkeit. Dadurch wird erstmalig eine genaue Überwachung des Dialysevorganges erreicht.

In der Zeichnung sind Ausführungsbeispiele des Gegenstandes der Erfindung schematisch dargestellt, aus denen sich weitere Erfindungsmerkmale ergeben; es zeigen:
- Fig. 1: eine isometrische Darstellung des prinzipiellen Meßverfahrens,
- Fig. 2: eine isometrische Darstellung einer Sensoranordnung mit Arbeits- und Meßelektroden,
- Fig. 3: eine teilweise geschnittene isometrische Ansicht eines als Schlauchverbinder ausgebildeten Sensors,
- Fig. 4: eine Schaltungsanordnung für einen Sensor nach Fig. 2 ohne Bezugselektroden,
- Fig. 5: eine Schaltung für einen Sensor nach Fig. 2 mit einer metallenen Rohrwand als Bezugselektrode.

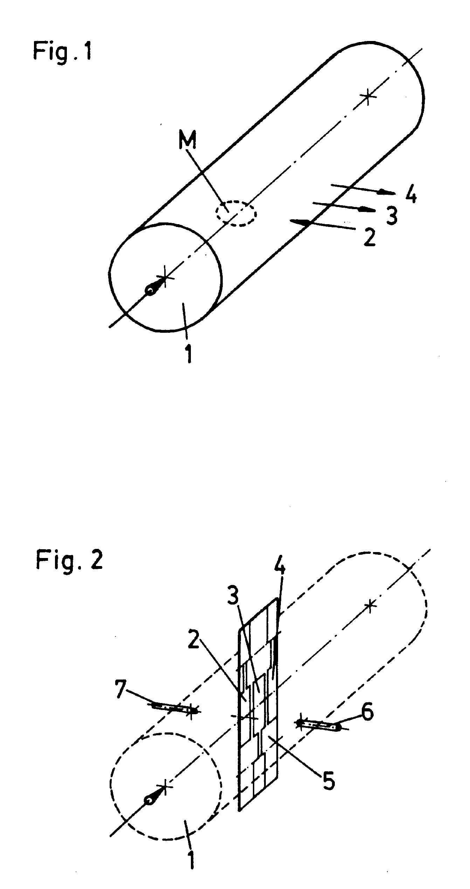

Bei der prinzipiellen Darstellung nach Fig. 1 sind in einem rohrförmigen Durchflußvolumen 1 eine das Markierungsvolumen erzeugende Arbeitselektrode 2 sowie in Strömungsrichtung nachgeschaltet, eine erste Meßelektrode 3 und eine zweite Meßelektrode 4 dargestellt, welche eine Meßstrecke bilden. Das durch die Arbeitselektrode 2 erzeugte, durch M angedeutete Markierungsvolumen verschiebt sich durch die Strömung und passiert die durch die Meßelektroden 3,4 gebildete Meßstrecke, wobei zur Messung der Strömungsgeschwindigkeit die Laufzeit und zur Identifizierung z.B. der zeitliche Verlauf des Meßsignals in verschiedener Weise durch verschiedene bekannte Meßverfahren, beispielsweise durch Leitfähigkeitsmessung oder potentiostatische Messung, ermittelt werden kann. Bei der Leitfähigkeitsmessung wandert das Markierungsvolumen höherer Leitfähigkeit durch die Meßstrecke, und die Bestimmung der Laufzeit erfolgt zweckmäßig durch eine Messung des Durchgangs des Maximalwertes der Leitfähigkeit.

In der Sensorausbildung nach Fig. 2 ist in dem das Durchflußvolumen 1 bestimmenden Hohlraum ein plättchenförmiger Elektrodenträger 5 aus dielektrischem Material angeordnet, welcher eine Arbeitselektrode 2 sowie die erste Meßelektrode 3 und die zweite Meßelektrode 4 als streifenförmige Schichtelektroden gegebenenfalls in beidseitiger Kondensatoranordnung trägt. Zur Homogenisierung des Feldes sind im Wandbereich weitere Elektroden 6,7 als Bezugselektroden gegenüber den Elektroden 2,3 und 4 angeordnet.

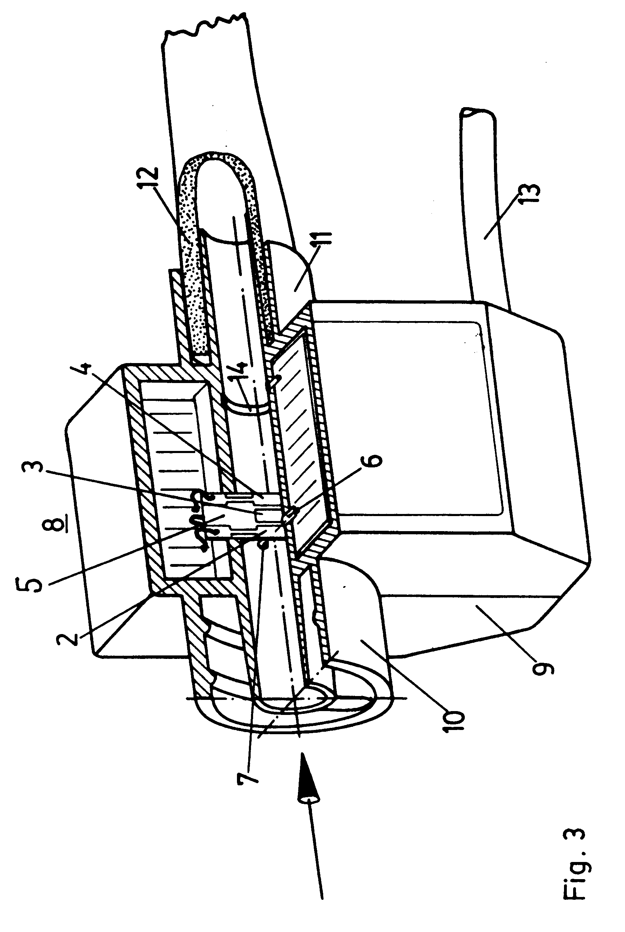

Fig. 3 zeigt eine integrierte Anordnung des Sensors innerhalb eines Schlauchverbinders 8, der an einem Gehäuse 9 Schlauchanschlußteile 10,11 aufweist. Einseitig ist ein eingesteckter Infusionsschlauch 12 dargestellt. Die Arbeitselektrode 2 und die Meßelektroden 3,4 sind auf dem plättchenförmigen Träger 5 aufgebracht, und in ihrem Bereich befinden sich die beiden Bezugselektroden 6,7. Innerhalb des geteilten Gehäuses 9 ist die Sensorelektronik in Dünnschichttechnologie auf einem Plattenträger aufgebracht, und eine Kabelverbindung 13 dient zum Anschluß an ein Infusions- und Überwachungsgerät.

Wegen der Kunststoffausbildung des Gehäuses und des integrierten Rohrabschnittes zur Aufnahme der Sensorbauteile ist zusätzlich im Wandbereich der Strömung eine Massepotentialelektrode 14 angeordnet. Durch den Kompaktaufbau ergeben sich kurze Verbindungsstrecken zwischen den Sensorelektroden und der zugehörigen Verstärkungsschaltung, so daß Störeinflüsse weitgehend ausgeschaltet werden können.

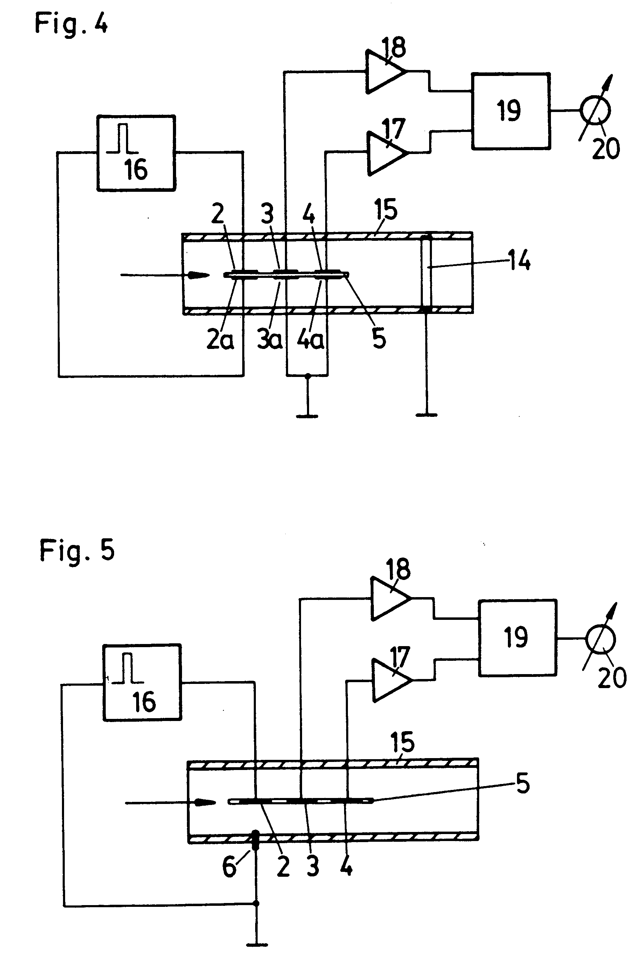

In Fig. 4 ist ein Rohr 15 aus Kunststoff dargestellt, in dem eine Sensoreinheit angeordnet ist. Diese besteht aus den eine Kondensatoreinheit bildenden Arbeitselektroden 2,2a, welche mit einem Impulsgenerator 16 zur Erzeugung von Gleichspannungsimpulsen verbunden sind. Die Gleichspannungsimpulse erreichen dabei eine Spitzenspannung von etwa 4,5 Volt bei einer Impulsdauer von 40 msec und einer Impulsfolge etwa im Sekundentakt. Die Impulse werden abwechselnd als positive und negative Spannungsimpulse angelegt. Durch diese Arbeitselektroden werden in der strömenden Flüssigkeit Markierungsvolumina induziert, welche in Strömungsrichtung zu der aus den Meßelektroden 3,3a und 4,4a gebildeten Laufzeitstrecke wandern und deren Laufzeit nach entsprechender Verstärkung der Signale durch Gleichspannungsverstärker 17,18 mit Hilfe einer Laufzeitmeßvorrichtung 19 bestimmt wird. In dieser Laufzeitmeßvorrichtung, die in verschiedener Weise nach bekannten Vorbildern, beispielsweise mit Hilfe eines Oszillographen aufgebaut sein kann, wird die Zeitdifferenz zwischen dem Durchgang der maximalen Leitfähigkeitsänderung an den beiden jeweils ebenfalls eine Kondensatoreinheit bildenden Meßelektroden 3,3a und 4,4a bestimmt. Die Zeitdifferenz entspricht mit entsprechendem Kalibrierfaktor der Strömungsgeschwindigkeit bzw. der strömenden Menge und wird durch ein Anzeigeinstrument 20 angezeigt bzw. als Eingangsgröße einer Regelschaltung benutzt. Die Massepotentialelektrode 14 dient zur Ableitung störender eingestreuter Potentiale. Die Elektrodenpaare 2,2a,3,3a und 4,4a sind auf einem plättchenförmigen Elektrodenträger 5 streifenförmig als Beschichtung aufgebracht.

Bei der Schaltung nach Fig. 5 wird ebenfalls ein Rohr 15 aus Kunststoff mit einer Bezugselektrode 6 verwendet. Die Arbeitselektrode 2 und die Meßelektroden 3,4 sind in den plättchenförmigen Elektrodenträger 5 unmittelbar eingelegt. Impulsgenerator 16, Gleichspannungsverstärker 17,18, Laufzeitmeßvorrichtung 19 sowie das Anzeigeinstrument 20 entsprechen der in Fig. 4 beschriebenen Anordnung.

Wie in Fig. 3,4 und 5 dargestellt, kann das Durchflußvolumen durch ein Rohr bestimmt werden, in dem sich die Elektroden als Einbauteile,vorteilhaft auf einem Elektrodenträger,befinden. Für verschiedene Anwendungszwecke erscheint es jedoch ferner zweckmäßig, die Elektroden auf einem frei plazierbaren Elektrodenträger anzubringen, wobei das Durchflußvolumen durch den Meßort, beispielsweise bei in vivo Messungen der Strömungsgeschwindigkeit in einer Arterie,bestimmt wird. Als Elektrodenträger läßt sich vorteilhaft auch ein Katheter anwenden, auf dessen Außenfläche die Arbeits- bzw. Meßelektroden aufgebracht sind. Das Markierungsvolumen wird dabei aus der strömenden Körperflüssigkeit, z.B. aus dem Blut erzeugt.

## Patentansprüche

1. Verfahren zur Strömungsmessung, bei dem durch Anlegen elektrischer Spannung ein Markierungsvolumen erzeugt wird, welches in Strömungsrichtung eine Meßstrecke durchläuft, wobei aus der Laufzeit des Markierungsvolumens die Strömungsgeschwindigkeit oder eine mit der Strömungsgeschwindigkeit verknüpfte Meßgröße ermittelt wird, **dadurch gekennzeichnet,** daß das Markierungsvolumen aus elektrolytischen Infusionslösungen, Medikamentenlösungen sowie Dialyselösungen und Körperflüssigkeiten, die in den Körper einströmen, im Körper fließen, aus dem Körper austreten oder mit Körperflüssigkeiten in Austausch treten, durch eine kurzzeitige elektrolytische Zerlegung der Flüssigkeit bzw. Lösung durch Gleichspannungsimpulse mit einer Dauer unterhalb von 50 msec. gebildet wird, und daß der Impulsabstand oberhalb von 1 sec. und die angelegte Spannung unterhalb von 24 Volt liegen.

2. Verfahren nach Anspruch 1, **dadurch gekennzeichnet,** daß die Laufzeit des Markierungsvolumens durch Leitfähigkeitsmessung bestimmt wird.

3. Verfahren nach Anspruch 1, **dadurch gekennzeichnet,** daß in der Meßstrecke zusätzlich ein elektrisches Gleich- und/oder Wechselfeld angelegt wird.

4. Verfahren nach Anspruch 1, **dadurch gekennzeichnet,** daß die Identifikation der Flüssigkeit aus dem zeitlichen Verlauf der Meßgröße erfolgt.

5. Sensor zur Strömungsmessung, umfassend eine ein Markierungsvolumen erzeugende Arbeitselektrode, zwei eine Meßstrecke bildende Meßelektroden, die in Strömungsrichtung hinter der Arbeitselektrode angeordnet sind,
einen Impulsgenerator, der so ausgebildet ist, Gleichspannungsimpulse an die Arbeitselektrode anzulegen, um durch kurzzeitige elektrolytische Zerlegung der Flüssigkeit ein Markierungsvolumen zu erzeugen,
eine Laufzeitmeßvorrichtung, die an den Meßelektroden angeschlossen ist und die so angeordnet ist, um aus der Laufzeit des Markierungsvolumens an den Meßelektroden vorbei, die Strömungsgeschwindigkeit zu bestimmen,
**dadurch gekennzeichnet**, daß um die Stömungsgeschwindigkeit von elektrolytischen Infusionslösungen, Medikamentenlösungen, sowie Dialyselösungen und Körperflüssigkeiten, die in den Körper einströmen, im Körper fließen, aus dem Körper austreten oder mit Körperflüssigkeiten in Austausch treten zu messen,
die Elektroden (2,2a;3,3a;4,4a) auf einem in einem einen Durchfluß bestimmenden Hohlraum angeordneten plättchenförmigen Elektrodenträger (5) angebracht sind, und daß
der Impulsgenerator (16) so angeordnet ist, daß die Gleichspannungsimpulse mit einer Dauer unterhalb von 50 msec gebildet werden, und der Impulsabstand oberhalb von 1 sec und die angelegte Spannung unterhalb von 24 Volt liegt.

6. Sensor nach Anspruch 5, **dadurch gekennzeichnet,** daß der Sensor als Schlauchverbinder (8) mit entsprechenden Anschlußteilen (10,11) ausgebildet ist.

7. Sensor nach Anspruch 5, **dadurch gekennzeichnet**, daß die Meßelektroden (3,3a;4,4a;) und/oder die Arbeitselektroden (2,2a) aus auf den gegenüberliegenden Seiten des dielektrischen Elektrodenträgers (5) angeordneten Belägen bestehen und eine Kondensatoranordnung bilden.

8. Sensor zur Strömungsmessung, umfassend eine ein Markierungsvolumen erzeugende Arbeitseleketrode, zwei eine Meßstrecke bildende Meßelektroden, die in Strömungsrichtung hinter der Arbeitselektrode angeordnet sind,
einen Impulsgenerator, der so ausgebildet ist, Gleichspannungsimpulse an die Arbeitselektrode anzulegen, um durch kurzzeitige elektrolytische Zerlegung der Flüssigkeit ein Markierungsvolumen zu erzeugen,
eine Laufzeitmeßvorrichtung, die an den Meßelektroden angeschlossen ist und die so angeordnet ist, um aus der Laufzeit des Markierungsvolumens an den Meßelektroden vorbei, die Strömungsgeschwindigkeit zu bestimmen,
**dadurch gekennzeichnet**, daß
um im Körper fließenden Körperflüssigkeiten zu messen,
die Elektroden (2,2a;3,3a;4,4a) auf der Außenseite eines Katheters angeordnet sind, und daß
der Impulsgenerator (16) so angeordnet ist, daß die Gleichspannungsimpulse mit einer Dauer unterhalb von 50 msec gebildet werden, und der Impulsabstand oberhalb von 1 sec und die angelegte Spannung unterhalb von 24 Volt liegt.

## Claims

1. A method of flow measurement in which a marker volume is generated by the application of electric voltage, said marker volume passing in the direction of flow through a measured length, wherein the flow speed or a measured value linked to the flow speed is determined from the transit time of the marker volume, characterised in that the marker volume is formed from electrolytic infusion solutions, drug solutions, as well as dialysis solutions and body fluids, which flow into the body, flow inside the body and flow out of the body, or which enter into exchange with body fluids, by short-term electrolytic breakdown of the fluid or solution by d.c. voltage pulses of a duration less than 50 msec, and that the pulse spacing is greater than 1 sec and the applied voltage is smaller than 24 V.

2. A method as claimed in Claim 1, characterised in that the transit time of the marker volume is determined by conductivity measurement.

3. A method as claimed in Claim 1, characterised in that an electrical d.c.- and/or a.c. field is additionally applied in the measured length.

4. A method as claimed in Claim 1, characterised in that the identification of the fluid is achieved from the progress of the measured value over time.

5. A sensor for flow measurement comprising a work electrode which generates a marker volume, two test electrodes which form a measured length and which are arranged downstream of the work electrode in the direction of flow, a pulse generator which is designed so as to apply d.c. voltage pulses to the work electrode in order to generate a marker volume by short-term electrolytic breakdown of the fluid, a transit time measuring device which is connected to the test electrode and which is arranged in such manner as to determine the flow speed from the transit time of the marker volume past the test electrodes, characterised in that in order to measure the flow speed of electrolytic infusion solutions, drug solutions as well as dialysis solutions and body fluids, which flow into the body, flow inside the body and flow out of the body, or which enter into exchange with body fluids,
the electrodes (2, 2a; 3, 3a; 4, 4a;) are arranged on a lamellar electrode support (5) arranged in a cavity defining a through-flow, and that the pulse generator (16) is arranged in such manner that the d.c voltage pulses are formed with a duration of less than 50 msec and the pulse spacing is greater than 1 sec and the applied voltage is smaller than 24 V.

6. A sensor as claimed in Claim 5, characterised in that the sensor has the form of a hose coupling (8) with appropriate connections (10, 11).

7. A sensor as claimed in Claim 5, characterised in that the test electrodes (3, 3a; 4, 4a;) and/or the work electrodes (2, 2a) consist of coatings arranged on the opposite sides of the dielectric electrode support (5) and form a capacitor arrangement.

8. A sensor for flow measurement comprising a work electrode which generates a marker volume, two test electrodes which form a measured length and which are arranged downstream of the work electrode in the direction of flow, a pulse generator which is designed so as to apply d.c. voltage pulses to the work electrode in order to generate a marker volume by short-term electrolytic breakdown of the fluid, a transit-time measuring device which is connected to the test electrodes and is arranged in such manner as to determine the flow speed from the transit time of the marker volume past the test electrodes, characterised in that in order to measure body fluids flowing in the body the electrodes (2, 2a; 3, 3a; 4, 4a;) are arranged on the exterior surface of a catheter, and that the pulse generator (16) is arranged in such manner that the d.c. voltage pulses are formed with a duration of less than 50 msec and the pulse spacing is greater than 1 sec and the applied voltage is smaller than 24 V.

## Revendications

1. Méthode pour la mesure d'écoulement, dans laquelle un volume de marquage, qui passe au travers d'une ligne de mesure dans le sens d'écoulement, est produit par l'appplication d'une tension électrique, la vitesse d'écoulement, ou une grandeur de mesure combinée à la vitesse d'écoulement, étant déterminée à partir du temps de parcours du volume de marquage, caractérisée en ce que le volume de marquage est formé, à partir de solutés de perfusion, solutions médicamenteuses, solutés de dialyse et liquides organiques électrolytiques, qui pénètrent dans le corps, s'écoulent dans le corps, s'échappent de ce dernier, ou entrent en échange avec des liquides organiques, par une décomposition électrolytique instantanée du liquide et/ou de la solution, par des impulsions de tension continue d'une durée inférieure à 50 msec, et en ce que l'intervalle d'impulsion est supérieur à 1 sec et la tension appliquée inférieure à 24 V.

2. Méthode suivant la revendication 1, caractérisée en ce que le temps de parcours du volume de marquage est déterminé par mesure de la conductivité.

3. Méthode suivant la revendication 1, caractérisée par l'application supplémentaire d'un champ électrique continu et/ou alternatif dans la ligne de mesure.

4. Méthode suivant la revendication 1, caractérisée en ce que le liquide est identifié à partir de l'allure dans le temps de la grandeur de mesure.

5. Capteur pour la mesure d'écoulement, comportant une électrode de travail qui produit un volume de marquage, deux électrodes de mesure formant une ligne de mesure et disposées en aval de l'électrode de travail, dans le sens d'écoulement, un générateur d'impulsions, réalisé de manière à appliquer des impulsions de tension continue sur l'électrode de travail, pour produire un volume de marquage par décomposition électrolytique instantanée du liquide, un dispositif de mesure du temps de parcours, raccordé aux électrodes de mesure et disposé de manière à déterminer la vitesse d'écoulement à partir du temps de parcours du volume de marquage sur les électrodes de mesure, caractérisé en ce que, pour mesurer la vitesse d'écoulement de solutés de perfusion, solutions médicamenteuses, solutés de dialyse et liquides organiques électrolytiques, qui pénètrent dans le corps, s'écoulent dans le corps, s'échappent du corps, ou entrent en échange avec des liquides organiques, les électrodes (2, 2a; 3, 3a; 4, 4a) sont placées sur un support d'électrodes (5) en forme de plaquette, disposé dans une cavité déterminant un débit, et en ce que le générateur d'impulsions (16) a une disposition telle, que les impulsions de tension continue sont formées avec une durée de moins de 50 msec, et que l'intervalle d'impulsion est supérieur à 1 sec et la tension appliquée inférieure à 24 V.

6. Capteur suivant la revendication 5, caractérisé en ce que le capteur est réalisé sous forme de connecteur pour flexible (8), avec des éléments de jonction (10, 11) adéquats.

7. Capteur suivant la revendication 5, caractérisé en ce que les électrodes de mesure (3, 3a; 4, 4a) et/ou les électrodes de travail (2, 2a) se composent de couches, disposées sur les côtés opposés du support d'électrodes (5) diélectrique, et forment un agencement de condensateur.

8. Capteur pour la mesure d'écoulement, comportant une électrode de travail qui produit un volume de marquage, deux électrodes de mesure formant une ligne de mesure et disposées en aval de l'électrode de travail, dans le sens d'écoulement, un générateur d'impulsions, réalisé de manière à appliquer des impulsions de tension continue sur l'électrode de travail, pour produire un volume de marquage par décomposition électrolytique instantanée du liquide, un dispositif de mesure du temps de parcours, raccordé aux électrodes de mesure et disposé de manière à déterminer la vitesse d'écoulement, à partir du temps de parcours du volume de marquage sur les électrodes de mesure, caractérisé en ce que, pour mesurer des liquides organiques s'écoulant dans le corps, les électrodes (2, 2a; 3, 3a; 4, 4a) sont disposées sur la face ex,terne d'un cathéter, et en ce que le générateur d'impulsions (16) a une disposition telle, que les impulsions de tension continue sont formées avec une durée de moins de 50 msec, et que l'intervalle d'impulsion est supérieur à 1 sec, et la tension appliquée inférieure à 24 V.
